# EUROPEAN PATENT APPLICATION

(11) **EP 4 791 090 A2**
(43) Date of publication of application: **12.08.2026**
(21) Application number: 24877555.3
(22) Date of filing: 11.10.2024
(51) Int. Cl.: H04W 52/02, H04W 48/18, H04W 60/04, H04W 72/51, H04W 88/06

(54) **METHOD AND DEVICE FOR WIRELESS RESOURCE MANAGEMENT BASED ON ENERGY IN WIRELESS COMMUNICATION SYSTEM**

(30) Priority: 13.10.2023 KR 20230136592
(71) Applicant: Samsung Electronics Co., Ltd., Suwon-si, Gyeonggi-do 16677 (KR)
(72) Inventor: SUH, Dongeun, Suwon-si, Gyeonggi-do 16677 (KR); PARK, Jungshin, Suwon-si, Gyeonggi-do 16677 (KR); LEE, Hoyeon, Suwon-si, Gyeonggi-do 16677 (KR)
(74) Representative: Nederlandsch Octrooibureau
(86) International application number: PCT/KR2024/015402
(87) International publication number: WO 2025/080020

(57) **Abstract**

The present disclosure relates to a 5G or 6G communication system for supporting higher data transmission rates. According to an embodiment of the present disclosure, a method of an access and mobility management function (AMF) entity in a wireless communication system comprises the steps of: determining whether to change an energy mode for a user equipment (UE); when it is determined to change the energy mode for the UE, transmitting a policy update request message including information on the energy mode to a policy control function (PCF) entity; and receiving, from the PCF entity, a policy update response message including at least one piece of updated wireless resource-related priority information based on the information on the energy mode.

## Description

### [Technical Field]

The disclosure relates to a method and a device for managing radio resources in consideration of energy usage in a wireless communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Detailed Description of the Invention]

### [Technical Problem]

The disclosure relates to a method and an apparatus for managing wireless resources in consideration of energy usage in a wireless communication system, and is directed to managing wireless resources in order to cope with a situation in which network energy usage should be reduced for the purposes of compliance with an energy usage regulation, reduction in costs due to power consumption, and the like.

### [Technical Solution]

According to an embodiment of the disclosure, a method of an access and mobility management function (AMF) entity in a wireless communication system may include determining whether to change an energy mode for a user equipment (UE), in case of determining to change the energy mode for the UE, transmitting a policy update request message including information on the energy mode to a policy control function (PCF) entity, and receiving a policy update response message including at least one updated radio resource-related priority information based on the information on the energy mode from the PCF entity.

According to an embodiment of the disclosure, a method of a policy control function (PCF) entity in a wireless communication system may include receiving a policy update request message including information on an energy mode for a user equipment (UE) from an access and mobility management function (AMF) entity and transmitting a policy update response message including at least one updated radio resource-related priority information based on the information on the energy mode to the AMF entity.

According to an embodiment of the disclosure, an access and mobility management function (AMF) entity in a wireless communication system may include a transceiver and at least processor, wherein the at least one processor is configured to determine whether to change an energy mode for a user equipment (UE), in case of determining to change the energy mode for the UE, transmit a policy update request message including information on the energy mode to a policy control function (PCF) entity, and receive a policy update response message including at least one updated radio resource-related priority information based on the information on the energy mode from the PCF entity.

According to an embodiment of the disclosure, a policy control function (PCF) entity in a wireless communication system may include a transceiver and at least one processor, wherein the at least one processor is configured to receive a policy update request message including information on an energy mode for a user equipment (UE) from an access and mobility management function (AMF) entity and transmit a policy update response message including at least one updated radio resource-related priority information based on the information on the energy mode to the AMF entity.

### [Advantageous Effects]

Through the disclosure, a network operator can achieve network energy saving effects through radio resource management of the UE for energy consumption reduction.

### [Brief Description of Drawings]

FIG. 1 illustrates an architecture of a 5G system.
FIG. 2 illustrates a method of providing a policy control request (PCR) trigger based on an energy mode of a UE in a registration procedure according to an embodiment of the disclosure.
FIG. 3 illustrates a method of updating a radio access technology (RAT)/frequency selection priority (RFSP) index depending on an energy mode change of a UE according to an embodiment of the disclosure.
FIG. 4 illustrates a method of selecting a policy control function (PCF) supporting network energy saving (NES) and a method of providing a plurality of RFSP indexes (or RFSP indexes considering NES) in a registration procedure according to an embodiment of the disclosure.
FIG. 5 illustrates a method of, when energy mode information (or NES status) of the UE is changed, notifying the base station of the energy mode information (or NES status) and applying a corresponding RFSP index to the UE, according to an embodiment of the disclosure.
FIG. 6 illustrates a structure of a network entity according to an embodiment of the disclosure.

### [Mode for Carrying out the Invention]

Hereinafter, an embodiment of the disclosure will be described in detail with reference to the accompanying drawings.

In describing the disclosure, descriptions related to technical contents well-known in the art and not associated directly with the disclosure will be omitted. Such an omission of unnecessary descriptions is intended to prevent obscuring of the main idea of the disclosure and more clearly transfer the main idea. The terms which will be described below are terms defined in consideration of the functions in the disclosure, and may be different according to users, intentions of the users, or customs. Therefore, the definitions of the terms should be made based on the contents throughout the specification.

For the same reason, in the accompanying drawings, some elements may be exaggerated, omitted, or schematically illustrated. Also, the size of each element does not completely reflect the actual size thereof. In the respective drawings, the same or corresponding elements are assigned the same reference numerals.

In the following description, a base station is an entity that allocates resources to terminals, and may be at least one of a gNode B, an eNode B, a Node B (or xNode B (where, x is an alphabet including one of g and e)), a wireless access unit, a base station controller, a satellite, an airborne, and a node on a network. A user equipment (UE) may include a mobile station (MS), a vehicular, a satellite, an airborne, a cellular phone, a smartphone, a computer, or a multimedia system capable of performing communication functions. In the disclosure, a "downlink (DL)" refers to a radio link via which a base station transmits a signal to a terminal, and an "uplink (UL)" refers to a radio link via which a terminal transmits a signal to a base station. Additionally, a "sidelink (SL)" may exist, which refers to a radio link via which a UE transmits a signal to another UE.

Furthermore, in the following description, LTE or LTE-A systems may be described by way of example, but the embodiments of the disclosure may also be applied to other communication systems having similar technical backgrounds or channel types. For example, 5G-Advance, NR-Advance, or 6th generation (6G) mobile communication technologies developed beyond 5G mobile communication technologies (or new radio (NR)) may be included therein, and in the following description, the "5G" may be the concept that covers the exiting LTE, LTE-A, or other similar services. In addition, based on determinations by those skilled in the art, the disclosure may also be applied to other communication systems through some modifications without significantly departing from the scope of the disclosure.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

The 3GPP, which is responsible for cellular mobile communication standardization, has introduced a new core network structure named 5G core (5GC) and is pursuing the standardization in order to push evolution from a 4G LTE system to a 5G system. 5GC supports the following distinguishable functions, compared to an evolved packet core (EPC) that is a network core for 4G.

In 5GC, a network slicing function is introduced. As requirements of 5G, 5GC is required to support various terminal types and services (e.g., enhanced mobile broadband (eMBB), ultra reliable low latency communications (URLLC), and massive machine type communications (mMTC)). Such terminals/services each have different requirements for a core network. For example, the eMBB service may require a high data rate, and the URLLC service may require high stability and low latency. A network slicing technology has been proposed to satisfy these various service requirements.

Network slicing may mean a method of virtualizing one physical network to make many logical networks (e.g., network slices). Activated network slices may be called network slice instances, and each network slice instance (NSI) may have a different characteristic. A mobile communication service provider may configure a network function (NF) suitable for the characteristic of each NSI so as to satisfy various service requirements according to terminals/services. For example, the mobile communication service provider may assign an NSI suitable for the characteristic of a service required thereby, so that many 5G services (e.g., eMBB, URLLC, or mMTC) are efficiently supportable.

5GC may easily support a network virtualization paradigm by separating a mobility management function and a session management function. In 4G LTE, all terminals have been provided with services from a network through signaling exchange with single core equipment, which is called a mobility management entity (MME) serving as registration, authentication, and a mobility management and session management function. In 5G, as the number of terminals (including, for example, MTC terminals) has explosively increased and mobility and traffic/session characteristics to be supported have been subdivided according to terminal types, scalability for adding entities according to required functions is inevitably reduced if a single entity (for example, MME) supports all the functions. Therefore, in order to improve scalability in terms of signaling loads and the function/implementation complexity of a core entity responsible for a control plane, various functions are being developed based on a structure of separating a mobility management function and a session management function.

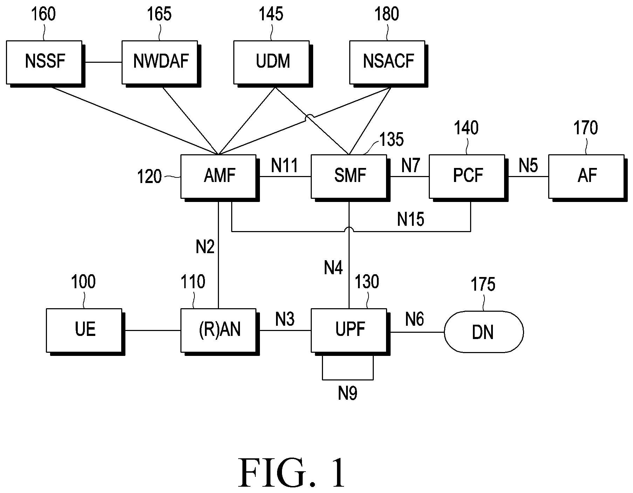

FIG. 1 illustrates an architecture of a 5G system.

A 5G mobile communication network includes a 5G user equipment (UE) (terminal) 100, a 5G radio access network (RAN, a base station, a 5g nodeB (gNB), an evolved node B (eNB), etc.) 110, and a 5G core network. The 5G core network may include network functions (NFs), such as an access and mobility management function (AMF) 120 that provides a mobility management function of the UE, a session management function (SMF) 135 that provides a session management function, a user plane function (UPF) 130 that performs a data transfer role, a policy control function (PCF) 140 that provides a policy control function, a unified data management (UDM) 145 that provides a function of managing data, such as subscriber data and policy control data, or a unified data repository (UDR) that stores data of various NFs such as the UDM.

The 5G core network may further include NFs, such as a network slice selection function (NSSF) 160, a network data analytic function (NWDAF) 165, an application function (AF) 170, a data network (DN) 175, and a network slice admission control function (NSACF) 180.

In 3GPP systems, conceptual links connecting NFs in the 5G system are defined as reference points. In the following, examples of reference points included in the 5G system architecture described in FIG. 1 are provided below.
- N1: A reference point between a UE and an AMF
- N2: A reference point between an (R)AN and an AMF
- N3: A reference point between an (R)AN and a UPF
- N4: A reference point between an SMF and a UPF
- N5: A reference point between a PCF and an AF
- N6: A reference point between a UPF and a DN
- N7: A reference point between an SMF and a PCF
- N8: A reference point between a UDM and an AMF
- N9: A reference point between two core UPFs
- N10: A reference point between a UDM and an SMF
- N11: A reference point between an AMF and an SMF
- N12: A reference point between an AMF and an AUSF
- N13: A reference point between a UDM and an authentication server function (AUSF)
- N14: A reference point between two AMFs
- N15: A reference point between a PCF and an AMF for a non-roaming scenario, and a reference point between a PCF and an AMF in a visited network for a roaming scenario

In the 5G system, network slicing refers to a structure and a technology enabling multiple independent logical networks virtualized in a single physical network. In order to satisfy specialized requirements of a service/application, a network operator provides a service by configuring a virtual end-to-end network referred to as a network slice. In this case, the network slice is distinguished by an identifier referred to as single-network slice selection assistance information (S-NSSAI). The network transmits a set of allowed slices (e.g., allowed NSSAI(s)) to a UE during a UE registration procedure, and the UE transmits and receives application data via a protocol data unit (PDU) session generated via one piece of S-NSSAI (i.e., network slice) in the set of allowed slices.

An RAT)/frequency selection priority (RFSP) index is a parameter applied to each UE and is a parameter for applying a radio-resource management (RRM) strategy that enables use of a specific RAT (e.g., E-UTRA or NR), frequency band, and/or the like for the UE, and may be referred to as radio resource-related priority information. The RFSP index is determined by the 5G core network and then transmitted to a base station (RAN). Upon receiving the RFSP index for the UE, the base station may apply a specific RRM strategy for the RFSP index, based on internally defined configuration information.

The disclosure proposes a method in which a network may dynamically determine an energy-saving state for a UE and dynamically change an RFSP index for the UE, based on energy-saving state information for the UE. For example, when network energy saving for the UE is activated, the core network may update the RFSP index for the UE to an RFSP index (e.g., an RFSP index for a low frequency band) that consumes less network energy than the current RFSP index. Alternatively, the disclosure shows a method of determining a plurality of RFSP indexes for a UE that has agreed to network energy saving activation and providing the same to the base station. In this case, the plurality of RFSP indexes may include an RFSP index for a case in which network energy saving is deactivated for a UE and an RFSP index for a case in which network energy saving is activated. The base station may, when receiving the plurality of RFSP indexes as above, select an RFSP index to be applied to the UE depending on whether network energy saving is currently activated for the UE and apply a radio resource management strategy regarding the corresponding RFSP index.

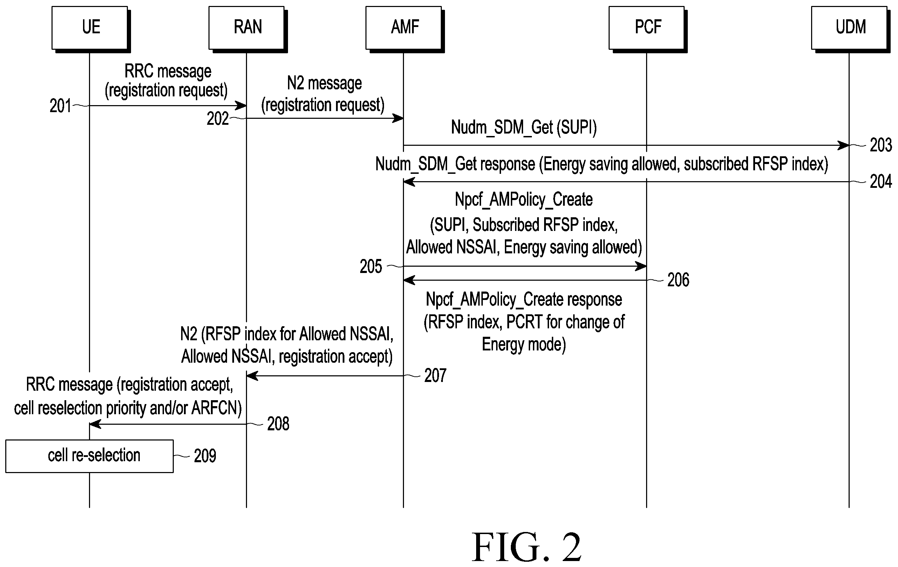

FIG. 2 illustrates a method of providing a policy control request (PCR) trigger according to an energy mode of a UE in a registration procedure according to an embodiment of the disclosure.

In operation 201, the UE may transmit an RRC message including a registration request message to an RAN. The registration request message may include at least one of the following pieces of information.\
- UE identifier (ID): corresponds to identifier information of the UE, and may include, when the UE has an available 5G-globally unique temporary identity (GUTI) allocated by the network, the 5G-GUTI, and may include, when not, a subscription permanent identifier (SUCI).
- Requested NSSAI: may include information of S-NSSAI(s) requested by the UE.
- UE MM Capability: may include information on features supported by the UE. When the UE supports network energy saving (NES), support of NES may be included.

In operation 202, the RAN may transmit the registration request message received from the UE to an AMF.

In operations 203 and 204, the AMF may transmit a message making a request for subscription information of the UE to the UDM, and may receive a subscription information response message including the subscription information of the UE from the UDM.

As an embodiment, the subscription information of the UE received by the AMF from the UDM in operation 204 may include at least one of an energy saving (ES) allowed indication, information related to a time for which energy saving may be applied, subscribed S-NSSAI(s), and a subscribed RFSP index.

As an embodiment, the subscribed S-NSSAI(s) may include whether each S-NSSAI is a default S-NSSAI.

In operation 205, the AMF may transmit a policy create request message to the PCF to make a request for an access and mobility management policy (AM policy). As an embodiment, when the message received from the UDM in operation 204 includes an ES allowed indication or the UE supports the NES function (that is, when the information included in the registration request includes support of NES), the AMF may include the ES allowed indication in an AM policy request message transmitted to the PCF. As an embodiment, the AMF may include a SUPI (UE identifier) and a subscribed RFSP index in a message transmitted to the PCF.

In operation 206, the PCF may include a policy control request (PCR) trigger for a change of energy mode in a policy create response message transmitted to the AMF. As an embodiment, when the ES allowed indication is included in the message received in operation 205 or the PCF supports network energy saving, the PCF may include a PCR trigger for a change of energy mode in a response message transmitted to the AMF.

As an embodiment, when the AMF receives the PCR trigger for change of energy mode, the AMF may perform an operation of, when the energy mode of the UE is changed, informing the PCF of the corresponding change. As an embodiment, the energy mode of the UE is a parameter for controlling network energy consumption with regard to the UE, and may have two or more stages. For example, the energy mode may be configured as one of three types, such as a non-energy saving mode, a low energy saving mode (a mode for low energy saving), and a high energy saving mode (i.e., a mode for high energy saving), or as one of two types, such as a normal mode and an energy saving mode.

In operation 207, the AMF may include an RFSP index for allowed NSSAI, allowed NSSAI, and a registration accept message in an N2 message transmitted to the RAN.

In operation 208, the RAN may include the registration accept message received from the AMF in an RRC message transmitted to the UE. As an embodiment, when receiving a RAT/frequency selection priority (RFSP) index from the AMF, the RAN may include a cell re-selection priority and/or an absolute radio-frequency channel number (ARFCN) stored as configuration information for the RFSP index in the RRC message.

In operation 209, when the cell re-selection priority is included in the message received from the RAN, the UE may perform cell reselection based thereon. As an embodiment, the cell re-selection priority included in the message received by the UE from the RAN may be configured to preferentially select a cell supporting a low frequency, in which case the UE may reselect a cell supporting a low frequency.

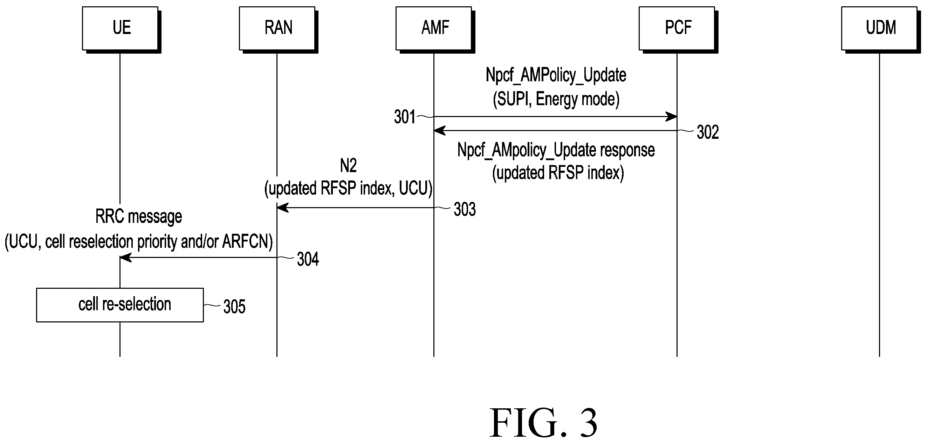

FIG. 3 illustrates an RFSP index update method based on an energy mode change by the UE according to an embodiment of the disclosure.

In step 301, when the AMF determines that energy saving is required, the AMF may change the energy mode (or activate energy saving for) for one or more UEs for which energy saving is allowed.

As an embodiment, when the AMF changes the energy mode for the UE (or activates energy saving for the UE), the AMF may transmit a message to the PCF to inform of the energy mode for the UE (or an energy saving activation indicator).

As an embodiment, the message that informs the PCF of the energy mode (or the energy saving activation indicator) for the UE may include a policy update request message. The corresponding message may include at least one of a SUPI (UE identifier information), an energy mode, and a subscribed RFSP index. As an embodiment, when the AMF determines that network energy saving is not required, the AMF may change the energy mode for at least one UE having an energy saving mode as the energy mode (or at least one UE indicating that the energy saving activation indicator is activated (enabled)) to a mode that does not require energy saving (e.g., a normal mode), or may change the energy saving activation indicator to indicate deactivated (disabled).

In operation 302, when the message received from the AMF includes an energy mode, the PCF may update the RFSP index and transmit a policy update response message including the updated RFSP index.

As an embodiment, when the subscribed RFSP index and the energy mode are included in the message received from the AMF, the PCF may determine an RFSP index considering the energy mode among the subscribed RFSP indexes.

For example, when the energy mode is changed to a mode requiring higher energy saving or is changed from an energy saving deactivation state to an energy saving activation state, the PCF may determine the RFSP index to indicate a frequency band (e.g., a low frequency band) that consumes less energy.

For example, when the energy mode is changed to a mode that not require energy saving or is changed from an energy saving activation state to an energy saving deactivation state, the PCF may determine the RFSP index to indicate a frequency band (e.g., a generally operating frequency band) that consumes more energy than the energy saving mode.

In operation 303, when the message received from the PCF includes the updated RFSP index, the AMF may include the updated RFSP index in the N2 message transmitted to the RAN. In addition, when changing the energy mode for the UE in operation 301, the AMF may change the allowed NSSAIs accordingly. For example, when the energy mode is changed to a mode requiring higher energy saving, the AMF may exclude one or more S-NSSAIs from the allowed NSSAIs or replace a previously included S-NSSAI with an S-NSSAI that consumes lower energy. For example, when the energy mode of the UE is changed to a mode (e.g., normal mode) that does not require energy saving, or when the energy saving state is changed from an energy saving activation state to a deactivated (disabled) state, the AMF may replace the S-MSSAI included in the Allowed NSSAIs with the S-NSSAI that had been included when the energy saving mode was not applied.

As an embodiment, when the AMF changed the allowed NSSAIs due to the change in the energy mode of the UE, the AMF may include a UE configuration update (UCU) message including the allowed NSSAIs together with the allowed NSSAIs in the N2 message transmitted to the RAN.

In operation 304, when the updated RFSP index is included in the message received from the AMF, the RAN may include, in an RRC message transmitted to the UE, a cell re-selection priority and/or an absolute radio-frequency channel number (ARFCN) stored as configuration information for the RFSP index. In addition, when the UE configuration update (UCU) message is included in the message received from the AMF, the RAN may include the UCU message in an RRC message transmitted to the UE.

In operation 305, when the cell re-selection priority is included in the message received from the RAN, the UE may perform cell reselection based thereon. For example, when the energy mode of the UE is changed to a mode requiring higher energy saving, or when the UE is changed from an energy saving deactivation state to an energy saving activation state, the cell re-selection priority included in the message received by the UE from the RAN may be configured to preferentially select a cell supporting a low frequency, in which case the UE may reselect the cell supporting the low frequency.

For example, when the energy mode of the UE is changed to a mode not requiring higher energy saving, or when the UE is changed from an energy saving activation state to an energy saving deactivation state, the cell re-selection priority included in the message received by the UE from the RAN may be configured to preferentially select a cell supporting a higher frequency than the frequency displayed in the energy saving mode, in which case the UE may reselect the cell supporting the low frequency.

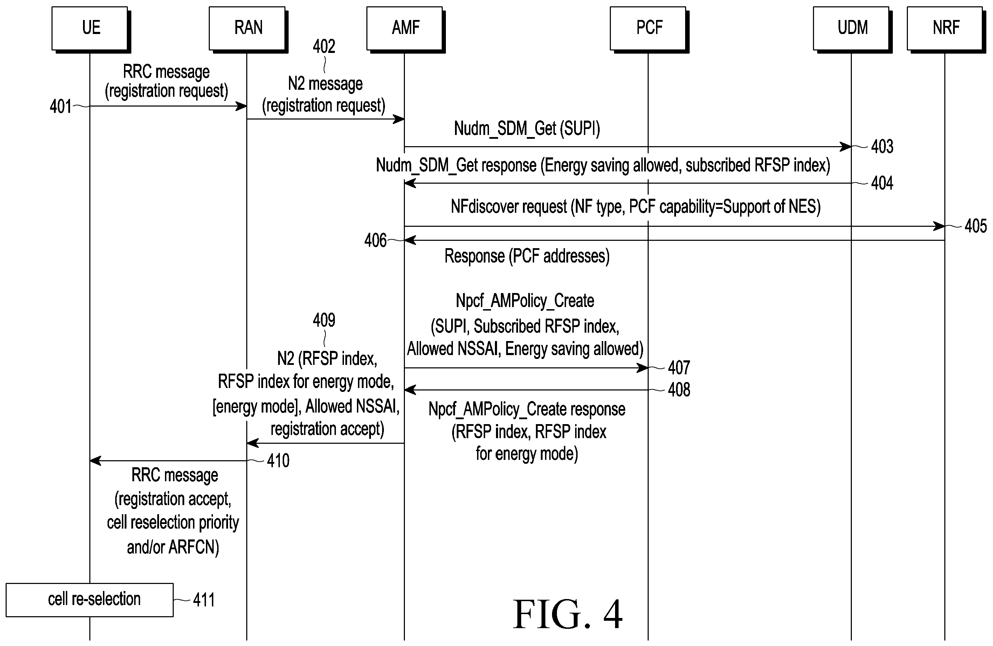

FIG. 4 illustrates a method of selecting a PCF supporting an NES and a method of providing a plurality of RFSP indexes (or RFSP indexes considering an NES) in a registration procedure according to an embodiment of the disclosure.

In operation 401, the UE may transmit an RRC message including a registration request message to the RAN. The corresponding message may include at least one piece of the following information.
- UE ID: is identifier information of the UE, and if the UE has an available 5G-GUTI allocated by the network, may include the same, and if not, may include an SUCI.
- Requested NSSAI: may include information of S-NSSAI(s) requested by the UE.
- UE MM Capability: may include information on features supported by the UE. When the UE supports network energy saving (NES), support of NES may be included.

In operation 402, the RAN may transmit the registration request message received from the UE to an AMF.

In operations 403 and 404, the AMF may transmit a message making a request for subscription information of the UE to the UDM and may receive a subscription information response message including the subscription information of the UE from the UDM.

As an embodiment, the subscription information of the UE received by the AMF from the UDM in operation 404 may include at least one of an energy saving (ES) allowed indication, information related to a time for which energy saving may be applied, subscribed S-NSSAI(s), and a subscribed RFSP index. The subscribed S-NSSAI(s) may include whether each S-NSSAI is a default S-NSSAI.

In operation 405, when the AMF supports NES, the UE supports NES, or the UE is a UE allowing energy saving (e.g., an ES Allowed indication is included in a message received from the UDM), the AMF may transmit a message making a request for an address of the PCF supporting NES to the NRF. As an embodiment, the AMF may include an NF type configured as the PCF and a PCF capability indicating support of NES in an NF discovery request message transmitted to the NRF.

In operation 406, when the information indicating that the PCF supporting the NES is included in the NF discovery message received from the AMF (e.g., support of NES is included in the PCF capability), the NRF may include an address (e.g., a fully qualified domain name (FQDN), etc.) of the PCF(s) supporting NES.

In operation 407, the AMF may select a PCF supporting NES, based on configuration information (e.g., when the address of the PCF supporting NES is stored in the configuration information) or an address of the PCF(s) supporting NES received from the NRF, and may transmit a message make a request for an access and mobility management policy (AM policy) to the selected PCF.

As an embodiment, when an ES allowed indication is included in the message received from the UDM or the UE supports the NES function (that is, when the information included in the registration request includes support of NES), the AMF may include the ES allowed indication in an AM policy request message transmitted to the PCF. In addition, the AMF may include a SUPI (UE identifier) and a subscribed RFSP index in the message transmitted to the PCF.

In operation 408, when the ES allowed indication or the information indicating that the UE supports NES is included in the message received in operation 407, the PCF may include a plurality of RFSP indices (or an RFSP index per energy mode) for the UE in a response message transmitted to the AMF. The plurality of RFSP indexes may include an RFSP index per current network energy saving level (e.g., energy mode or NES status) for the UE.

As an embodiment, the energy mode of the UE is a parameter for controlling energy that the network consumes for the UE (network energy consumption) and may have two or more stages. For example, the energy mode may be configured as one of three types, such as a non-energy saving mode, a low energy saving mode (a mode for low energy saving), and a high energy saving mode (i.e., a mode for high energy saving), or as one of two types, such as a normal mode and an energy saving mode.

For example, the plurality of RFSP indexes (or RFSP indexes considering NES) may include an RFSP index for a case in which the NES is deactivated and an RFSP index for a case in which the NES is activated.

In operation 409, the AMF may include at least one of an NES-aware RFSP index (or an RFSP index for energy mode), an energy mode (or NES status), an allowed NSSAI, or a registration accept message in the N2 message transmitted to the RAN.

As an embodiment, when the message received by the RAN from the AMF includes an energy mode (or an NES status, which may indicate one of NES activation or deactivation) together with an NES-aware RFSP index (or an RFSP index for an energy mode), the RAN may apply, to the UE, an RFSP index corresponding to the energy mode (or NES status) received from the AMF among the RFSP indexes included in the NES-aware RFSP indexes (or the RFSP indexes for the energy mode).

As an embodiment, the RAN may apply an RRM strategy for the selected RFSP index. If only the NES-aware RFSP index is included in the message received by the RAN from the AMF and the energy mode (or NES status) is not included, the RAN may determine that the NES for the UE is not activated, and may select an RFSP index corresponding to the corresponding state among the RFSP indexes included in the NES-aware RFSP indexes.

In operation 410, the RAN may include the registration accept message received from the AMF in an RRC message transmitted to the UE. As an embodiment, when determining an RFSP index for the UE in operation 409, the RAN may include a cell re-selection priority and/or an absolute radio-frequency channel number (ARFCN) stored as configuration information for the RFSP index the RRC message.

In operation 411, when the cell re-selection priority is included in the message received from the RAN, the UE may perform cell reselection based thereon. As an embodiment, the cell re-selection priority included in the message received by the UE from the RAN may be configured to preferentially select a cell supporting a low frequency, in which case the UE may reselect a cell supporting a low frequency.

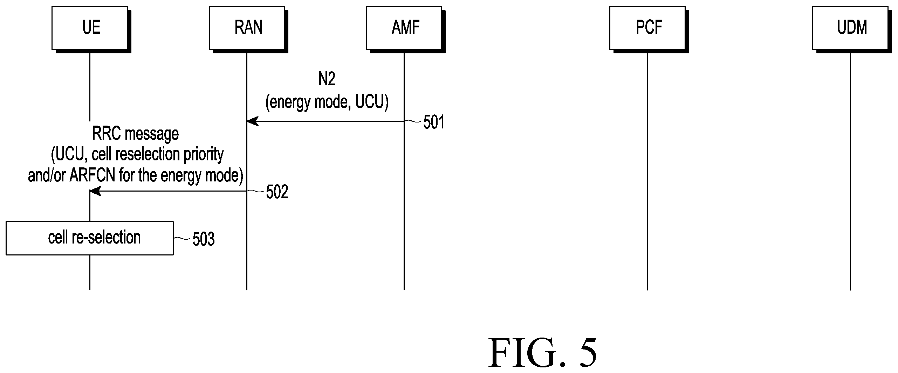

FIG. 5 illustrates a method in which, when changing energy mode information (or NES status) of the UE, the AMF notifies the base station of the energy mode information (or NES status) and applies a corresponding RFSP index to the UE, according to an embodiment of the disclosure.

More specifically, FIG. 5 is related to an embodiment in which the RAN receives NES-aware RFSP indexes (or RFSP indexes for energy mode) including one or more RFSP indexes from the AMF and stores the same, as in FIG. 4.

In operation 501, when determining that energy saving is required, the AMF may change the energy mode (or activate energy saving) for one or more UEs allowing energy saving and inform the RAN of the same through an N2 message.

As an embodiment, when changing the energy mode for the UE (or activating energy saving for the UE), the AMF may include a new energy mode for the UE in a message transmitted to the RAN.

As an embodiment, when changing the energy mode for the UE, the AMF may change the allowed NSSAI accordingly. For example, when the energy mode is changed to a mode requiring higher energy saving, one or more S-NSSAIs may be excluded from the allowed NSSAIs or a previously included S-NSSAI may be replaced with an S-NSSAI that consumes lower energy. When changing the allowed NSSAIs due to the change in the energy mode for the UE, the AMF may include a UE configuration update (UCU) message including the allowed NSSAIs together with the allowed NSSAIs in the N2 message transmitted to the RAN.

In operation 502, when an energy mode (or an NES status which may represent one of NES activation or NES deactivation) is included in the message received from the AMF and the RAN stores NES-aware RFSP indexes (or, RFSP indexes for energy mode) including one or more RFSP indexes for the UE, the RAN may select, for the UE, an RFSP index corresponding to the energy mode (or NES status) received from the AMF from among the RFSP indexes included in the NES-aware RFSP indexes (or, RFSP indexes for energy mode). For example, when the message received by the RAN from the AMF does not include the energy mode (or the NES status), the RAN may consider that energy saving is not applied to the UE and may select a corresponding RFSP index.

As an embodiment, the RAN may include the cell re-selection priority and/or the absolute radio-frequency channel number (ARFCN), which is stored as configuration information for the selected RFSP index, in an RRC message transmitted to the UE. As an embodiment, when the UE configuration update message is included in the message received from the AMF, the RAN may include the corresponding message in the RRC message transmitted to the UE.

As an embodiment, when the energy mode included in the message received by the RAN from the AMF indicates an energy saving mode (or the NES status indicates activation), the RAN may store corresponding information related to the energy mode in UE context for the corresponding UE, and may limit the amount of energy consumption for the corresponding UE. For example, when the energy mode included in the message received by the RAN from the AMF indicates the energy saving mode (or the NES status indicates activation), the UE-specific energy consumption mode in the RAN may be changed to the energy saving mode.

For example, when the energy mode included in the message received by the RAN from the AMF indicates a mode (e.g., a normal mode) other than the energy saving mode (or when the NES status indicates deactivation), the RAN may store the corresponding information related to the energy mode in the UE context for the corresponding UE, and may release the limit on the power consumption for the corresponding UE. For example, when the energy mode included in the message received by the RAN from the AMF indicates a mode (for example, a normal mode) other than the energy saving mode (or when the NES status indicates deactivation), the RAN may change the UE-specific energy consumption mode to the normal mode.

In operation 503, when the cell re-selection priority is included in the message received from the RAN, the UE may perform cell reselection based thereon. As an embodiment, the cell re-selection priority included in the message received by the UE from the RAN may be configured to preferentially select a cell supporting a low frequency, in which case the UE may reselect a cell supporting a low frequency.

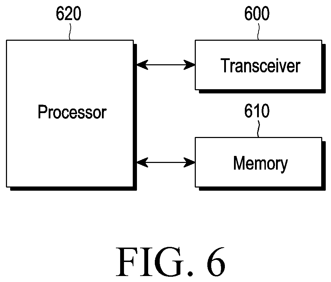

FIG. 6 illustrates a structure of a network entity according to an embodiment of the disclosure.

The network entity illustrated in FIG. 6 may include all of the AMF, SMF, PCF, UPF, UDM, RAN, and the like that are network entities according to an embodiment of the disclosure.

The network entity according to an embodiment of the disclosure may include a processor 620 which controls the overall operation of the network entity, a transceiver 600 which includes a transmitter and a receiver, and memory 610. Of course, the example given above is not limiting, and the network entity may include a smaller or larger number of components than the components illustrated in FIG. 6.

According to an embodiment of the disclosure, the transceiver 600 may transmit/receive signals with network entities or other network nodes. The signals transmitted/received with network entities may include control information and data. In addition, the transceiver 600 may receive signals through a radio channel, output the same to the processor 620, and transmit signals output from the processor 620 through the radio channel.

According to an embodiment of the disclosure, the processor 620 may control the network entity to perform operations according to any one of the above-described embodiments. Of course, the processor 620, the memory 610, and the transceiver 600 are not necessarily implemented as separate modules, but may be implemented as a single component unit such as a single chip. Also, the processor 620 and the transceiver 600 may be electrically connected to each other. In addition, the processor 620 may be an application processor (AP), a communication processor (CP), a circuit, an application-specific circuit, or at least one processor.

According to an embodiment of the disclosure, when the network entity of FIG. 6 is an AMF entity, the processor 620 may determine whether to change the energy mode for the user equipment (UE). When determining to change the energy mode for the UE, the processor 620 may control transmission of a policy update request message including information on the energy mode to a policy control function (PCF) entity. The processor 620 may control reception of a policy update response message including at least one updated RFSP index based on the information on the energy mode from the PCF entity. The processor 620 may control transmission of the N2 message including the at least one updated RFSP index to the radio access network (RAN).

According to an embodiment of the disclosure, the processor 620 may control reception of a registration request message of the UE from the RAN. The processor 620 may control reception of a subscription information response message for the UE from a UDM entity. The processor 620 may control transmission of a policy create request message to the PCF entity. As an embodiment, when the registration request message of the UE includes an energy saving indicator, or when the subscription information response message for the UE includes a first energy saving allowed indication, the policy create request message may include a second energy saving allowed indication.

According to an embodiment of the disclosure, the processor 620 may control reception of a policy create response message from the PCF entity. As an embodiment, when the policy create request message includes the second energy saving allowed indication, or when the PCF entity supports energy saving, the policy create response message may include a policy control request trigger (PCRT) for a change in the energy mode. As an embodiment, the policy update request message may be based on the PCRT. As an embodiment, the at least one updated RFSP index may include at least one updated RFSP index for each of at least one energy mode. As an embodiment, the processor 620 may control transmission of an N2 message including the at least one updated RFSP index for each of the at least one energy mode and information on the energy mode to the RAN.

According to an embodiment of the disclosure, when the network entity of FIG. 6 is the PCF entity, the processor 620 may control reception of a policy update request message including information on the energy mode for the UE from an access and mobility management function (AMF) entity. The processor 620 may control transmission of a policy update response message including at least one updated RFSP index based on the information on the energy mode to the AMF entity. As an embodiment, the at least one updated RFSP index may be included in the N2 message and transmitted to the radio access network (RAN).

According to an embodiment of the disclosure, the processor 620 may control reception of a policy create request message from the AMF entity. As an embodiment, when the registration request message from the UE includes an energy saving indicator or the subscription information response message for the UE transmitted from the UDM entity includes the first energy saving allowed indication, the policy create request message may include the second energy saving allowed indication.

According to an embodiment of the disclosure, the processor 620 may control transmission of a policy create response message to the AMF entity. As an embodiment, when the policy create request message includes the second energy saving allowed indication, or when the PCF entity supports energy saving, the policy create response message may include a policy control request trigger (PCRT) for a change in the energy mode. As an embodiment, the policy update request message may be based on the PCRT.

As an embodiment, the at least one updated RFSP index may include at least one updated RFSP index for each of at least one energy mode. As an embodiment, the at least one updated RFSP index for each of the at least one energy mode may be included in the N2 message together with the information on the energy mode and transmitted to the RAN.

Methods disclosed in the claims or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The one or more programs include instructions that cause the electronic device to perform the methods according to embodiments of the disclosure as defined by the appended claims or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method of an access and mobility management function (AMF) entity in a wireless communication system, the method comprising:
determining whether to change an energy mode for a user equipment (UE);
in case of determining to change the energy mode for the UE, transmitting, to a policy control function (PCF) entity, a policy update request message including information on the energy mode; and
receiving, from the PCF entity, a policy update response message including at least one updated radio resource-related priority information based on the information on the energy mode.

2. The method of claim 1, comprising:
receiving, from the UE, a registration request message for the UE;
receiving, from a unified data management (UDM) entity, a subscription information response message for the UE; and
transmitting, to the PCF entity, a policy create request message,
wherein, in case that the registration request message for the UE includes an energy saving indication or the subscription information response message for the UE includes a first energy saving allowed indication, the policy create request message includes a second energy saving allowed indication, and
wherein whether to change the energy mode for the user equipment (UE) is determined based on the first energy saving allowed indication.

3. The method of claim 2, comprising receiving, from the PCF entity, a policy create response message,
wherein, in case that the policy create request message comprises the second energy saving allowed indication or the PCF entity supports energy saving, the policy create response message comprises a policy control request trigger (PCRT) for an energy mode change, and
wherein the policy update request message is based on the PCRT.

4. The method of claim 1, further comprising transmitting, to a radio access network (RAN), an N2 message including at least one of the at least one updated radio resource-related priority information and the information on the energy mode,
wherein the at least one updated radio resource-related priority information includes at least one updated radio resource-related priority information for each of at least one energy mode.

5. A method of a policy control function (PCF) entity in a wireless communication system, the method comprising:
receiving, from an access and mobility management function (AMF) entity, a policy update request message including information on an energy mode for a user equipment (UE); and
transmitting a policy update response message including at least one updated radio resource-related priority information based on the information on the energy mode to the AMF entity.

6. The method of claim 5, comprising receiving, from the AMF entity, a policy create request message,
wherein, in case that a registration request message for the UE includes an energy saving indication or a subscription information response message for the UE, transmitted from a unified data management (UDM) entity, includes a first energy saving allowed indication, the policy create request message includes a second energy saving allowed indication, and
wherein whether to change the energy mode for the user equipment (UE) is determined based on the first energy saving allowed indication.

7. The method of claim 6, comprising transmitting, to the AMF entity, a policy create response message,
wherein, in case that the policy create request message includes the second energy saving allowed indication or the PCF entity support energy saving, the policy create response message includes a policy control request trigger (PCRT) for an energy mode chnage, and
wherein the policy update request message is based on the PCRT.

8. The method of claim 6, wherein at least one of at least one updated RFSR index and the information on the energy mode is included in an N2 message and transmitted to a radio access network (RAN), and
wherein the at least one updated radio resource-related priority information includes at least one updated radio resource-related priority information for each of at least one energy mode.

9. An access and mobility management function (AMF) entity in a wireless communication system, the AMF entity comprising:
a transceiver; and
at least processor,
wherein the at least one processor is configured to:
determine whether to change an energy mode for a user equipment (UE);
in case of determining to change the energy mode for the UE, transmit, to a policy control function (PCF) entity, a policy update request message including information on the energy mode; and
receive, from the PCF entity, a policy update response message including at least one updated radio resource-related priority information based on the information on the energy mode.

10. The AMF entity of claim 9, wherein the at least one processor is configured to:
receive, from the UE, a registration request message for the UE;
receive, from a unified data management (UDM) entity, a subscription information response message for the UE; and
transmit, to the PCF entity, a policy create request message ,
wherein, in case that the registration request message for the UE includes an energy saving indication or the subscription information response message for the UE includes a first energy saving allowed indication, the policy create request message includes a second energy saving allowed indication, and
wherein whether to change the energy mode for the user equipment (UE) is determined based on the first energy saving allowed indication.

11. The AMF entity of claim 10, wherein the at least one processor is configured to receive, from the PCF entity, a policy create response message,
wherein, in case that the policy create request message includes the second energy saving allowede indication or the PCF entity supports energy saving, the policy create response message includes a policy control request trigger (PCRT) for an energy mode change, and
wherein the policy update request message is based on the PCRT.

12. The AMF entity of claim 9, wherein the at least one processor is further configured to transmit an N2 message including at least one of the at least one updated radio resource-related priority information and the information on the energy mode to a radio access network (RAN), and
wherein the at least one updated radio resource-related priority information includes at least one updated radio resource-related priority information for each of at least one energy mode.

13. A policy control function (PCF) entity in a wireless communication system, the PCF entity comprising:
a transceiver; and
at least one processor,
wherein the at least one processor is configured to:
receive, from an access and mobility management function (AMF) entity, a policy update request message including information on an energy mode for a user equipment (UE); and
transmit, to the AMF entity, a policy update response message including at least one updated radio resource-related priority information based on the information on the energy mode.

14. The PCF entity of claim 13, wherein the at least one processor is configured to receive, from the AMF entity, a policy create request message,
wherein, in case that a registration request message for the UE includes an energy saving indication or a subscription information response message for the UE, transmitted from a unified data management (UDM) entity, includes a first energy saving allowed indication, the policy create request message includes a second energy saving allowed indication, and
wherein whether to change the energy mode for the user equipment (UE) is determined based on the first energy saving allowed indication.

15. The PCF entity of claim 14, wherein the at least one processor is configured to transmit, to the AMF entity, a policy create response message,
wherein, in case that the policy create request message includes the second energy saving allowed indication or the PCF entity support energy saving, the policy create response message includes a policy control request trigger (PCRT) for an energy mode change, and
wherein the policy update request message is based on the PCRT.
